# FASCICULE DE BREVET EUROPEEN

(11) **EP 4 005 185 B1**
(45) Date de publication et mention de la délivrance du brevet: **31.05.2023**
(21) Numéro de dépôt: 20746870.3
(22) Date de dépôt: 08.07.2020
(51) Int. Cl.: H04W 4/021, H04W 4/44, G08G 1/0967, H04L 67/55, H04L 67/12

(54) **PROCÉDÉ DE SOUSCRIPTION À UN GÉO-SERVICE DANS UNE ARCHITECTURE MEC**
VERFAHREN ZUM ABONNIEREN EINES GEODIENSTES IN EINER MEC-ARCHITEKTUR
METHOD FOR SUBSCRIBING TO A GEO-SERVICE IN A MEC ARCHITECTURE

(30) Priorité: 31.07.2019 FR 1908741
(43) Date de publication de la demande: 01.06.2022
(73) Titulaire: Renault s.a.s, 92100 Boulogne Billancourt (FR); NISSAN MOTOR CO., LTD., Yokohama-shi, Kanagawa 221-0023 (JP)
(72) Inventeur: PERRAUD, Eric, 31830 Plaisance du Touch (FR)
(74) Mandataire: Renault Group
(86) Numéro de dépôt international: PCT/EP2020/069197
(87) Numéro de publication internationale: WO 2021/018529

(56) Documents cités:
- EP-A1- 3 282 718
- KDDI ET AL: "TR-0026 v4.7.0", RDM-2019-0083-TR-0026-VEHICULAR_DOMAIN_ENA BLEMENT_V4_7_0.ZIP, ONEM2M , vol. WG1 - Requirements & Domain Models, RDM 13 juillet 2019 (2019-07-13), pages 1-203, XP084031716, Extrait de l'Internet: URL:http://member.onem2m.org/Application/d ocumentapp/downloadimmediate/default.aspx? docID=30356 RDM-2019-0083-TR-0026-Vehicular_Domain_Ena blement_v4_7_0.ZIP TR-0026-Vehicular Domain Enablement-V4_7_0(rm).docx [extrait le 2019-07-13]
- Aecc: "General Principle and Vision White Paper", , 25 avril 2018 (2018-04-25), XP055663635, Extrait de l'Internet: URL:https://aecc.org/wp-content/uploads/20 18/02/AECC_White_Paper.pdf [extrait le 2020-01-30]
- QUOC-VIET PHAM ET AL: "A Survey of Multi-Access Edge Computing in 5G and Beyond: Fundamentals, Technology Integration, and State-of-the-Art", ARXIV.ORG, CORNELL UNIVERSITY LIBRARY, 201 OLIN LIBRARY CORNELL UNIVERSITY ITHACA, NY 14853, 20 juin 2019 (2019-06-20), XP081378326,

## Description

La présente invention se rapporte de manière générale au domaine des télécommunications et concerne plus précisément un procédé de souscription d'un équipement mobile à des informations propres à un lieu géographique, dans une architecture MEC (d'après l'anglais « Mobile Edge Computing »).

L'architecture MEC telle que définie dans la spécification ETSI GS MEC 003 (« European Télécommunications Standards Institute Group Spécification Mobile Edge Computing ») permet de déporter certains calculs effectués dans un terminal mobile vers des serveurs distribués, localisés dans une zone géographique restreinte autour de la position du terminal mobile et/ou centralisés dans l'architecture MEC. Cela permet, notamment pour des dispositifs mobiles embarqués dans un véhicule connecté, de profiter d'une puissance de calcul très grande disponible dans ces serveurs, notamment pour afficher une cartographie haute définition de la route, enrichie d'événements en temps réel et qui peut être partagée entre véhicules connectés. Un service complémentaire hébergé dans ces serveurs est un service de détermination d'un horizon virtuel aussi appelé horizon électronique, informant le véhicule d'objets ou d'événements survenant dans un futur proche mais non accessibles immédiatement par les capteurs embarqués dans le véhicule. Ces services de cartographie ou d'horizon électronique sont des géo-services dans le sens où les données qu'ils traitent dépendent d'un lieu géographique.

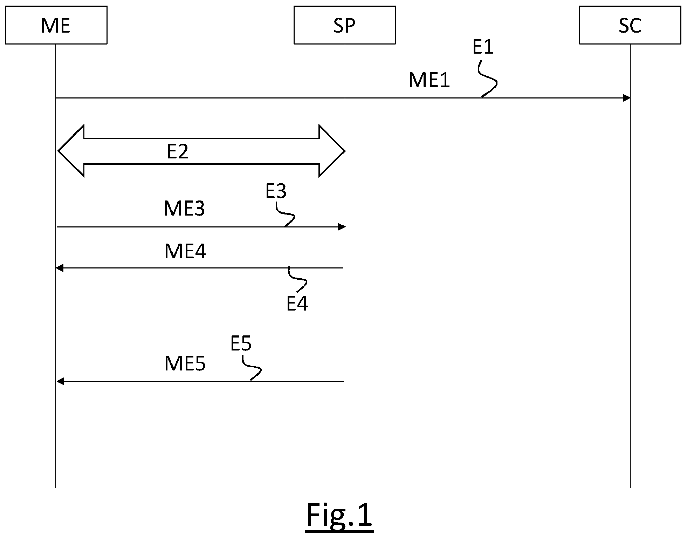

Un équipement mobile ME de véhicule voulant bénéficier d'un tel service doit d'abord s'identifier et s'enregistrer auprès d'un serveur central SC d'un réseau d'architecture MEC, dans une première étape E1 comportant l'envoi d'un message ME1 d'enregistrement, représenté à la **figure 1**. A la réception de ce message ME1, le serveur central SC authentifie l'équipement mobile ME. Celui-ci étant authentifié, le serveur central SC vérifie que l'équipement mobile ME a les droits nécessaires pour utiliser le géo-service requis puis l'autorise à l'utiliser.

Dans une deuxième étape E2, l'équipement mobile ME établit une session de communication avec un serveur périphérique SP de traitement de données qui instancie ce géo-service pour une zone géographique dans laquelle se trouve l'équipement mobile ME.

Une fois la session de communication établie, l'équipement mobile ME envoie dans une étape E3 un message ME3 de souscription au géo-service, au serveur périphérique SP. Ce message ME3 comporte une liste d'évènements susceptibles de l'intéresser dans une zone d'intérêt ROI qu'il indique également dans ce message ME3. La liste d'évènements comporte par exemple une valeur correspondant aux accidents de la route, et une autre valeur correspondant aux embouteillages. Le message ME3 peut être une requête de type http sécurisé.

L'étape suivante E4 est l'envoi par le serveur périphérique SP à l'équipement mobile ME d'un message d'acquittement ME4, ici un message http sécurisé d'acquittement.

Lorsqu'un évènement correspondant à la liste envoyée lors de l'étape E3 par l'équipement mobile ME survient, le serveur périphérique SP envoie un message ME5 sécurisé, pour en informer l'équipement mobile ME, dans une étape E5.

Cette procédure permettant à un équipement mobile de souscrire à un géo-service induit une communication coûteuse entre l'équipement mobile et le serveur périphérique. En effet l'étape E2 de connexion https (d'après l'anglais « HyperText Transfer Protocol Secure ») incluant l'ouverture d'une session de communication et une négociation TLS (d'après l'anglais « Transport Layer Security ») comporte l'échange d'environ vingt messages. Ces communications utilisent de plus des tranches uRLLC (d'après l'anglais « ultra-reliable and low latency connexion ») à forte qualité de service pour assurer une notification en temps réel de l'équipement mobile. Ce sont donc des communications relativement chères et volumineuses en données pour l'équipement mobile et pour le réseau d'architecture MEC dont les ressources uRLLC sont limitées, tout comme les ressources de calcul dans les serveurs périphériques du réseau. De plus, le temps utilisé sur un serveur périphérique pour lancer une éxécution d'un géo-service est onéreux.

Le document EP 3 282 718 A1 (WIPRO LTD [IN]) 14 février 2018 (2018-02-14) fait partie de l'état de l'art pertinent.

Il existe donc un besoin pour un équipement mobile, de limiter l'usage des ressources uRLLC et les connexions sur un serveur périphérique, lorsqu'il est utilisateur d'un géo-service dans un réseau d'architecture MEC.

Un des buts de l'invention est de remédier à au moins une partie des inconvénients de la technique antérieure en fournissant un procédé de souscription d'un équipement mobile à un géo-service, et un procédé d'envoi à un équipement mobile d'informations liées à un géo-service, qui limitent les procédures de souscription de l'équipement mobile aux cas où les serveurs périphériques instanciant ce géo-service ont réellement des informations à fournir à l'équipement mobile.

A cette fin, l'invention propose un procédé de souscription d'un équipement mobile à des informations sur des événements d'au moins un type auprès d'un service de notification lié à la géographie d'un lieu, ledit service de notification étant hébergé dans un serveur périphérique de traitement de données dans un réseau d'architecture MEC, ledit procédé étant mis en oeuvre dans ledit équipement mobile et comportant des étapes de :
- envoi d'un message de demande d'enregistrement auprès d'un serveur central dudit réseau,
- envoi d'un message de souscription à destination dudit serveur périphérique de traitement de données, audit au moins un type d'évènement,
- réception d'un message donnant des informations audit équipement mobile sur un évènement dudit au moins un type,
ledit procédé étant tel que ledit message de demande d'enregistrement indique ledit au moins un type d'évènement et en ce que l'étape d'envoi d'un message de souscription est conditionnée à l'existence d'une étape précédente de réception d'un message de notification qu'un évènement dudit au moins un type est survenu dans ledit lieu, des informations correspondantes étant aptes à être communiquées par ledit serveur périphérique, ledit message de notification étant délivré audit équipement mobile sur un canal de messagerie rapide dit canal de « paging ».

Grâce à l'invention, l'équipement mobile ne déclenche la procédure de souscription auprès du serveur périphérique de traitement de données que si celui-ci a effectivement des informations à fournir à l'équipement mobile, c'est-à-dire qui correspondent à moins un des types d'évènements pour lesquels l'équipement mobile s'est enregistré préalablement auprès du serveur central. Ainsi on évite d'envoyer inutilement des messages correspondant à la procédure de souscription, on économise des ressources uRLLC et du réseau coeur de l'architecture MEC, et on réduit la consommation électrique du véhicule.

Selon une caractéristique avantageuse du procédé de souscription selon l'invention, ledit équipement mobile indique dans ledit message de souscription une région d'intérêt pour laquelle ledit serveur périphérique doit lui envoyer lesdites informations sur lesdits événements d'au moins un type.

Ainsi même lorsque le véhicule souscrit auprès du serveur périphérique à certains types d'évènements, on économise l'envoi d'informations ne correspondant pas à la zone géographique présentant vraiment un intérêt pour l'équipement mobile.

Typiquement, ledit équipement mobile est un module de communication d'un véhicule automobile et ladite région d'intérêt correspond à une trajectoire programmée dudit véhicule. Cet exemple d'utilisation de l'invention présente un intérêt particulier car la région d'intérêt peut être traitée de manière dynamique, le serveur central et les serveurs périphériques étant par exemple couplés à un service de localisation du véhicule pour suivre la position de celui-ci et restreindre dynamiquement la zone de diffusion des messages de notification.

Selon une autre caractéristique avantageuse du procédé de souscription selon l'invention, l'étape de réception d'un message de notification comporte une sous-étape de décodage d'un champ de données spécifique à une telle notification d'évènement, ledit champ de données spécifique étant inclus dans un champ de données attribué au réseau coeur et présent dans le champ « Paging record » dudit canal de messagerie rapide.

Ce champ de données spécifique est par exemple attribué à tous les services V2X (d'après l'anglais « vehicle-to-everything ») ce qui permet de spécifier une liste de type d'évènements auxquels les véhicules peuvent souscrire.

L'invention concerne aussi un procédé d'envoi à un équipement mobile d'informations sur un évènement d'un type par un serveur périphérique de traitement de données hébergeant un service de notification lié à la géographie d'un lieu dans un réseau d'architecture MEC, ledit procédé étant mis en oeuvre dans ledit réseau et comportant des étapes de :
- réception par un serveur central d'un message de demande d'enregistrement envoyé par ledit équipement mobile, ledit message comportant une indication d'au moins ledit type d'évènement,
- envoi par ledit serveur central d'un message indiquant au moins ledit type d'évènement à au moins un serveur périphérique de traitement de données dudit réseau hébergeant ledit service de notification,
- vérification par ledit au moins un serveur périphérique de la présence d'évènements dudit type dans sa base de données,
- lorsque ledit au moins un serveur périphérique comporte dans sa base de données un évènement dudit type, envoi par ledit au moins un serveur périphérique d'un message à au moins une station de base à laquelle il est rattaché pour diffusion sur un canal de messagerie rapide d'un message de notification de la présence dudit type d'évènement, audit équipement mobile,
- réception par ledit au moins un serveur périphérique d'un message de souscription audit type d'évènement, envoyé par ledit équipement mobile,
- envoi par ledit au moins un serveur périphérique d'un message audit équipement mobile, donnant des informations sur ledit événement.

Avantageusement, ledit message de souscription comporte une région d'intérêt, et ladite étape d'envoi d'un message donnant des informations est conditionnée au fait que ledit évènement concerne ladite région d'intérêt.

Avantageusement encore, lors de l'étape d'envoi par ledit serveur central d'un message indiquant au moins ledit type d'évènement, ledit message indiquant au moins ledit type d'évènement n'est envoyé qu'aux serveurs périphériques de traitement de données dudit réseau hébergeant ledit service de notification dont la couverture réseau correspond à la position actuelle ou programmée dudit équipement mobile.

Avantageusement encore, ledit au moins un serveur périphérique n'envoie un message qu'aux stations de base correspondant à la position actuelle ou programmée dudit équipement mobile, pour diffusion sur un canal de messagerie rapide dudit message de notification de la présence dudit évènement audit équipement mobile.

Avantageusement encore, ledit au moins un serveur périphérique n'envoie ledit message à ladite au moins une station de base que si ledit évènement est associé à la zone couverte par ladite au moins une station de base.

Avantageusement encore, l'étape d'envoi par ledit au moins un serveur périphérique d'un message donnant des informations audit équipement mobile est suivie d'une étape d'envoi d'un message par ledit au moins un serveur périphérique à ladite moins une station de base à laquelle il est rattaché pour stopper la diffusion sur ledit canal de messagerie rapide dudit message de notification lorsque ledit évènement devient obsolète ou lorsque ledit équipement mobile sort de la zone desservie par ledit au moins un serveur périphérique de traitement de données.

Le procédé d'envoi à un équipement mobile d'informations sur un évènement d'un type par un serveur périphérique de traitement de données selon l'invention présente des avantages analogues à ceux du procédé de souscription selon l'invention.

D'autres caractéristiques et avantages apparaîtront à la lecture d'un mode de réalisation préféré décrit en référence aux figures dans lesquelles :
- la figure 1, décrite en relation avec l'art antérieur, représente une procédure de souscription d'un équipement mobile à des événements auprès d'un géo-service selon l'art antérieur,
- la figure 2 représente une procédure de souscription d'un équipement mobile à des événements auprès d'un géo-service selon l'invention, ainsi qu'un procédé d'envoi à cet équipement mobile d'informations sur ces évènements selon l'invention, dans ce mode préféré de réalisation de l'invention,
- la figure 3 représente des étapes de suspension de l'envoi de messages de notification à l'équipement mobile lorsque les événements correspondants sont devenus obsolètes, dans ce mode préféré de réalisation de l'invention,
- et la figure 4 représente des étapes de suspension de l'envoi de messages de notification à l'équipement mobile lorsque celui-ci sort de la zone de couverture correspondante, dans une variante de réalisation du procédé selon l'invention.

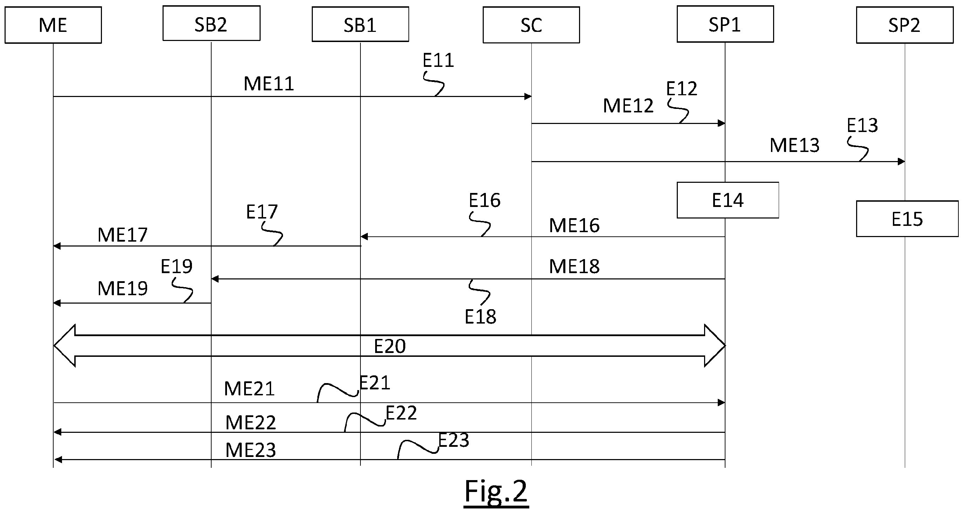

Selon un mode de réalisation préféré de l'invention, un équipement mobile ME souscrit à un service de notification d'informations liées à la géographie d'un lieu, appelé géo-service, par la procédure représentée à la **figure 2****.**

Dans une première étape E11, l'équipement mobile ME, ici embarqué dans un véhicule, envoie un message ME11 d'enregistrement à un serveur central SC d'un réseau d'architecture MEC. Ce message ME11 comporte un identifiant de l'équipement mobile ME, des valeurs de paramètres permettant d'évaluer les capacités de traitement et de communication du véhicule, un identifiant du géo-service auquel l'équipement mobile ME s'enregistre, et une ou des valeurs correspondant à des types d'évènement dont l'équipement mobile demande à être notifié. Ces évènements correspondent par exemple à des travaux, des accidents, des véhicules lents ou des embouteillages. Le message ME11 s'appuie par exemple sur le protocole https.

A la réception de ce message ME11, le serveur central SC authentifie l'équipement mobile ME, puis vérifie que l'équipement mobile ME a les capacités nécessaires pour utiliser le géo-service requis, et l'autorise à l'utiliser auprès des serveurs périphériques de traitement de données instanciant ce géo-service. Le serveur central SC envoie notamment, après l'étape E11, un message ME12 à un premier serveur périphérique SP1 dans une étape E12 et un message ME13 à un deuxième serveur périphérique SP2 dans une étape E13. Ces serveurs correspondent aux serveurs périphériques instanciant le géo-service et dont l'opérateur autorise l'accès à l'équipement mobile ME en fonction notamment de l'abonnement de celui-ci. Les messages ME12 et ME13 s'appuient par exemple sur les protocoles https ou mqtt (d'après l'anglais « Message Queuing Telemetry Transport ») sur une couche sécurisée. En variante, si le serveur central SC est interfacé avec un service de localisation de l'équipement mobile ME, le serveur central SC n'envoie de messages, immédiatement après la première étape E11, qu'au serveur périphérique de traitement de données correspondant à une localisation grossière du véhicule. Ainsi le véhicule bénéficiera du géo-service même s'il se déplace dans une zone de distance prédéfinie.

Les messages ME12 et ME13 comportent chacun un identifiant de l'équipement mobile ME et une liste de valeurs correspondant à des types d'évènement dont il demande à être notifié. Cet identifiant d'équipement mobile dérive de l'IMEI (d'après l'anglais « International Mobile Equipment Identity ») selon les standards du réseau cellulaire. Les étapes E12 et E13 sont chacune suivies respectivement des étapes E14 et E15 qui sont par exemple effectuées simultanément.

L'étape E14 est la vérification, par le serveur périphérique SP1, qu'un ou plusieurs évènements du type inclus dans la liste reçue à l'étape E12 sont enregistrés dans sa base de données. Dans cet exemple de réalisation de l'invention, on suppose qu'au moins un de ces évènements est enregistré dans la base de données du serveur périphérique SP1, par exemple un accident dans la zone géographique couverte par ce serveur périphérique.

De même l'étape E15 est la vérification, par le serveur périphérique SP2, qu'un ou plusieurs évènements du type inclus dans la liste reçue à l'étape E13 sont enregistrés dans sa base de données. Dans cet exemple de réalisation de l'invention, on suppose qu'aucun évènement correspondant n'est enregistré dans la base de données du serveur périphérique SP2. De ce fait le serveur périphérique SP2 enregistre la liste reçue à l'étape E13 mais n'initie pas de procédure de notification concernant l'équipement mobile ME.

Après l'étape E14, le serveur périphérique SP1 envoie un message ME16 à une première station de base SB1 lors d'une étape E16, et un message ME18 à une deuxième station de base SB2 lors d'une étape E18. Ces messages utilisent par exemple le protocole https.

Ces stations de base SB1 et SB2 correspondent aux stations d'émission et de réception radio auxquelles le serveur périphérique SP1 est rattaché. En variante, si le serveur périphérique SP1 est interfacé avec un service de localisation de l'équipement mobile ME, le serveur périphérique SP1 n'envoie de messages, immédiatement après l'étape E14, qu'aux stations de base correspondant à une localisation grossière du véhicule, et/ou aux stations de base dont la couverture géographique correspond aux événements enregistrés dans la base de données du serveur périphérique SP1. Ainsi le véhicule bénéficiera du géo-service même s'il se déplace dans une zone de distance prédéfinie et ne sera notifié que des événements liés à cette zone de distance prédéfinie.

Les messages ME16 et ME18 comportent chacun un identifiant de l'équipement mobile ME et une ou des valeurs correspondant aux types d'événements enregistrés dans la base de données du serveur périphérique SP1 et compris dans la liste reçue à l'étape E12, ici une valeur correspondant à un accident.

A la réception du message ME16, la station de base SB1 envoie dans une étape E17, un message ME17 de notification à l'équipement mobile ME. L'envoi de ce message de notification ME17 utilise le canal de messagerie rapide dit de « paging ». Pour cela la station de base SB1 ajoute dans le sous-champ LTE (d'après l'anglais « Long Term Evolution ») dit « Paging Occasion (PO) » correspondant à l'identifiant de l'équipement mobile, un champ de données spécifique « V2X » dans le champ de données dit « PagingRecord » d'une liste de données « PagingRecordList » à destination des équipements mobiles rattachés à la station de base SB1.

Le champ de données « PagingRecord » comporte alors les champs de données suivants :
- « UE-identity » qui code une valeur d'identifiant de l'équipement mobile ME,
- « cn-domain » qui prend les valeurs « ps » pour « packet-switched», « cs » pour « circuit-switched » ou « V2X » qui est une nouvelle valeur permettant de notifier l'équipement mobile selon l'invention, la valeur « cn-domain » choisie étant celle qui correspond au message destiné à l'équipement mobile : communication de données entrante, communication voix entrante ou message de notification selon l'invention. Dans cet exemple de réalisation de l'invention le champ « cn-domain » prend donc la valeur « V2X ».
- le champ de données spécifique « V2X » qui code, dans cet exemple de réalisation, le type d'évènement correspondant à un accident. Plus généralement, le contenu de ce champ est une table énumérant l'ensemble des événements présents dans la base de données du serveur périphérique associé à la station de base considérée et pour lesquels l'équipement mobile dont l'identifiant est « UE -identity » est potentiellement intéressé (i.e. qui font partie du message d'enregistrement ME11. Ainsi si lors du message d'enregistrement ME11, le véhicule a indiqué qu'il était intéressé par 4 types d'évènements {accident, animal sur la route, travaux, embouteillage}, le serveur périphérique SP1 ayant dans sa base de données des événements de type accident seulement, le champ « V2X » prend la valeur {Accident}.

Le message ME17 correspondant à ce champ de données spécifique « V2X » est notifié périodiquement à l'équipement mobile ME, qui se réveille typiquement toutes les 1 ,048s (secondes) pour lire le champ « Paging Occasion ». Cette période de 1,048 correspond à un cycle réception discontinue appelé DRX, et permet à l'équipement mobile ME de ne pas monopoliser en continu ses ressources radio à l'écoute du canal de « paging » lorsqu'il est en mode veille. A la réception du message ME17 dans cette étape E17, l'équipement mobile ME décode donc ce champ spécifique « V2X » du message ME17 transmis sur le canal de « paging » et constate que le géo-service a enregistré un évènement de type « accident » susceptible de correspondre à sa région d'intérêt ROI.

De même à la réception du message ME18, la station de base SB2 envoie dans une étape E19, un message ME19 de notification à l'équipement mobile ME. L'envoi de ce message de notification ME17 comportant le type d'évènement correspondant à un accident ainsi que l'identifiant de l'équipement mobile, utilise le canal de « paging » de manière similaire à l'étape E17.

On suppose, dans cet exemple de réalisation de l'invention, que l'équipement mobile ME se trouve sous la couverture de la station de base SB1 et reçoit donc le message de notification ME17.

L'étape suivante E20 est alors l'établissement d'une session de communication avec le serveur périphérique SP1 de traitement de données, afin de récupérer des informations sur l'évènement de type « accident » dont il vient d'être notifié. Cette étape E20 se déroule de manière similaire à l'étape E2.

L'étape suivante E21 est l'envoi par l'équipement mobile ME d'un message de souscription ME21 à l'évènement de type « accident ». Ce message ME21 comporte l'identité de l'équipement mobile ainsi qu'une valeur correspondant au type d'évènement « accident », et qu'une région d'intérêt ROI correspondant, dans cet exemple de réalisation de l'invention, à une trajectoire programmée du véhicule.

Il est à noter que ce message ME21 ne comporte pas de valeur correspondant à un type d'évènement autre qu'«accident » puisque l'équipement mobile sait grâce au message de notification ME17 qu'il n'y a pas d'événements d'autres types enregistrés dans la base de données du serveur périphérique SP1. De plus l'équipement mobile ME n'envoie un message de souscription qu'au serveur périphérique SP1 car c'est celui qui correspond à sa position géographique.

Si entretemps un nouveau type d'événement apparaissait dans la base de données du serveur SP1 (un animal sur la route étant détecté par exemple), le champ « V2X » du « Paging Record » des équipements mobiles intéressés par ce type d'événement serait mis à jour et les équipements mobiles seraient notifiés de ce nouveau type d'évènement lors de la prochaine transmission du message de messagerie rapide, dit de paging. Un équipement mobile recevrait alors une notification sur ce canal avec le champ « V2X » valant {Accident, Animal sur la route}. Après reçu cette notification, il pourrait alors inclure ce nouveau type d'événement dans son prochain message de souscription auprès du serveur SP1.

A la réception du message ME21, le serveur périphérique SP1 envoie un message ME22 d'acquittement à l'équipement mobile ME, dans une étape E22. Puis le serveur périphérique SP1 vérifie si l'évènement qu'il a enregistré se trouve dans la région d'intérêt ROI du véhicule. On suppose dans cet exemple de réalisation, que l'accident dont il est question s'est produit dans la zone d'intérêt ROI du véhicule.

L'étape suivante E23 est alors l'envoi d'un message ME23 par le serveur périphérique SP1 à l'équipement mobile ME, comportant des informations liées à l'accident, notamment la position de l'accident.

Il est à noter qu'en fonction des occurrences d'événements traités par le géo-service, plus ou moins d'échanges de messages sont nécessaires dans le réseau d'architecture MEC lors de l'utilisation de l'invention. Notamment :
- dans le cas où l'accident n'a pas lieu dans la zone d'intérêt du véhicule, l'étape E23 n'a pas lieu, le serveur périphérique n'envoyant pas les informations correspondantes au véhicule dans ce cas.
- dans le cas où un autre type d'évènement a lieu dans la zone desservie par le serveur périphérique SP1, par exemple des travaux, les messages ME17 et ME19 comporteront deux valeurs dans le champ de données spécifique « V2X », correspondant aux types « accident » et « travaux » pourvu que l'équipement ait indiqué lors de l'étape E11 d'enregistrement être intéressé par au moins les événements de type « accident » et « travaux ».
- dans le cas où un autre évènement d'un type compris dans la liste reçue à l'étape E13 a lieu dans la zone desservie par le serveur périphérique SP2, celui-ci envoie des messages aux stations de base auxquelles il est associé pour qu'elles notifient par le canal de « paging » la présence de cet autre évènement à l'équipement mobile ME. Celui-ci ne recevra cette notification que lorsqu'il entrera sous la couverture d'une de ces stations de base.

Il est à noter que dans ce dernier cas où un autre évènement a lieu dans la zone desservie par le serveur périphérique SP2, l'ordre d'exécution des étapes est différent dans la variante dans laquelle le serveur central SC n'envoie un message comportant les événements d'intérêt pour l'équipement mobile qu'au serveur périphérique SP1 desservant la zone dans laquelle se trouve le véhicule. En effet dans cette variante, il faut attendre que le véhicule entre dans la zone desservie par le serveur périphérique SP2 pour que le serveur central SC, notifié de ce mouvement par le service de localisation, envoie un message avec les événements d'intérêt au serveur périphérique SP2, qui alors envoie des messages aux stations de base auxquelles il est rattaché, ces stations de base notifiant alors l'équipement mobile ME. Si le serveur périphérique SP2 est également interfacé avec le service de localisation, il n'envoie de préférence un message qu'à la station de base sous laquelle se trouve l'équipement mobile ME, et éventuellement seulement si cet autre évènement se trouve dans la zone couverte par cette station de base, afin d'économiser encore des ressources réseau et radio.

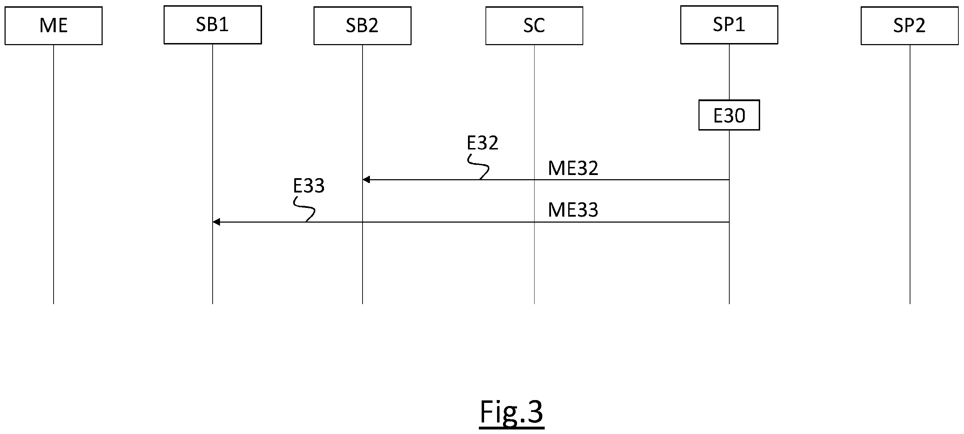

En référence à la **figure 3**, des étapes supplémentaires E30 à E33 sont prévues dans le cas où le serveur périphérique SP1 n'a plus d'événements enregistrés dans sa base de données, pour lesquels l'équipement mobile ME avait demandé à recevoir des notifications. Dans cet exemple d'utilisation de l'invention, on suppose par exemple que le véhicule accidenté correspondant à l'évènement notifié à l'étape E17 a été dégagé de la route.

L'étape E30 est alors la suppression, dans la base de données du serveur périphérique SP1, de l'évènement correspondant à cet accident.

Les étapes suivantes E32 et E33 sont l'envoi de messages ME32 et ME33 par le serveur périphérique SP1, respectivement à la station de base SB2 et à la station de base SB1, leur demandant d'arrêter d'insérer le message « V2X » correspondant au type d'évènement « accident » dans le canal de « paging » à destination de l'équipement mobile ME. Les stations de base SB2 et SB1 libèrent ainsi des ressources radio et mémoire en effaçant cette demande de notification de leur base de données. Il est à noter que le serveur périphérique n'efface pas pour autant ses données liées à l'équipement mobile ME pour le géo-service tant que l'équipement mobile ne se désenregistre pas de ce géo-service. Ainsi si un nouvel évènement intéressant l'équipement mobile ME survient, le serveur périphérique SP1 sera en mesure de ré-envoyer des messages similaires aux messages ME16 et ME18 à ses stations de base de rattachement.

Dans la variante où le serveur périphérique SP1 est interfacé avec un service de localisation, le serveur périphérique SP1 n'envoie de message demandant l'arrêt de la notification à l'équipement mobile ME par le canal de « paging » qu'à la station de base sous la couverture de laquelle se trouve l'équipement mobile ME.

L'équipement mobile est notifié de la disparition de l'accident par l'absence du champ de donnée « V2X » dans le canal de « paging », au prochain cycle de réception discontinue DRX. Si au contraire un prochain champ de données « V2X » émis par le canal de « paging » comporte un nouveau type d'évènement, compris dans le message ME11, par exemple correspondant à des travaux, alors l'équipement mobile « ME » pourra mettre à jour sa demande de souscription pour recevoir les informations correspondantes par l'envoi d'un nouveau message similaire au message ME21.

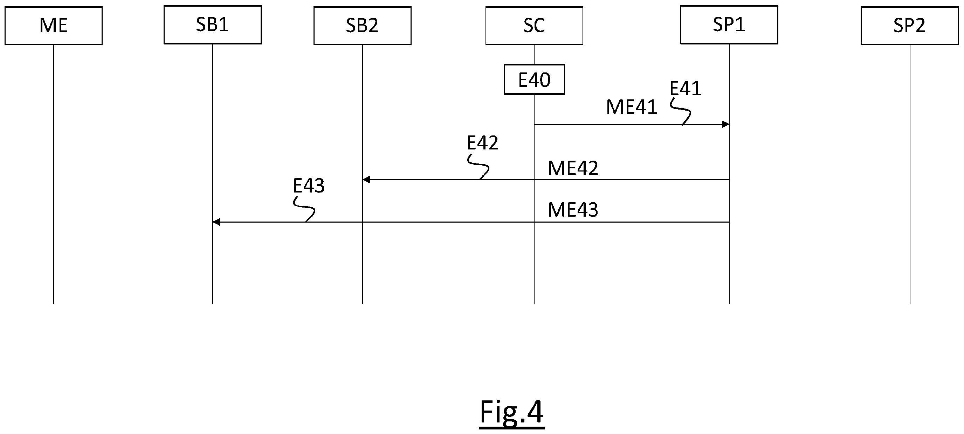

En référence à la **figure 4****,** des étapes supplémentaires E40 à E43 sont prévues dans la variante de réalisation de l'invention dans laquelle le serveur central SC est interfacé avec un service de localisation de l'équipement mobile ME.

En effet dans cette variante de réalisation, afin d'économiser des ressources radio, le serveur central SC libère les ressources attribuées à l'équipement mobile ME dans un serveur périphérique lorsque l'équipement mobile ME sort de la zone desservie par ce serveur périphérique. Ces ressources seront bien sûr réattribuées à nouveau par un message envoyé par le serveur central SC au serveur périphérique si le serveur central SC détecte un retour de l'équipement mobile ME dans la zone desservie par ce serveur périphérique.

Ainsi à l'étape E40, le serveur central SC détecte une sortie de l'équipement mobile ME de la zone desservie par le serveur périphérique SP1.

L'étape suivante E41 est alors l'envoi d'un message ME41, par le serveur central SC, au serveur périphérique SP1. Ce message ME41 signale que l'équipement mobile ME a changé de serveur périphérique de rattachement.

A la réception du message ME41, le serveur périphérique SP1 envoie des messages ME42 dans une étape E42 à la station de base SB2, et ME43 dans une étape E43 à la station de base SB1, puis efface de sa mémoire les données attribuées à l'équipement mobile ME concernant le géo-service. Ces messages ME42 et ME43 sont similaires aux messages ME32 et ME33 : ils demandent l'arrêt de la notification par le canal de « paging » à destination de l'équipement mobile ME des types d'évènements intéressant l'équipement mobile ME. Les stations de base SB2 et SB1 libèrent ainsi des ressources radio et mémoire en effaçant cette demande de notification de leur base de données.

Dans la variante où le serveur périphérique SP1 est interfacé avec un service de localisation, le serveur périphérique SP1 n'envoie de message demandant l'arrêt de la notification à l'équipement mobile ME par le canal de « paging » qu'à la station de base sous la couverture de laquelle se trouvait l'équipement mobile ME.

Il est à noter que dans la variante principale de réalisation, les ressources attribuées à la notification d'évènements au véhicule ne sont définitivement libérées dans les serveurs périphériques et dans les stations de base en général que lors du désenregistrement du véhicule au géo-service.

De plus d'autres variantes de réalisation de l'invention sont bien entendu envisageables et parfois combinables. Par exemple en variante le serveur central SC est interfacé avec un service de localisation de l'équipement mobile ME, mais au lieu de faire attribuer des ressources pour l'équipement mobile ME dans les différents serveurs périphériques dynamiquement en fonction de la position de l'équipement mobile, il fait attribuer ces ressources une fois pour toutes, après le message d'enregistrement ME11, dans tous les serveurs périphériques desservant la région d'intérêt de l'équipement mobile ME, par exemple une trajectoire programmée. Dans ce cas le message d'enregistrement ME11 comporte la région d'intérêt ROI de l'équipement mobile ME. Dans cette variante ou une autre variante les serveurs périphériques sont par exemple interfacés avec un service de localisation très précis, permettant de ne monopoliser des ressources pour l'équipement mobile ME pour le géo-service que dans les stations de base auxquelles est rattaché l'équipement mobile ME.

Enfin le message de notification utilisant le canal de paging peut s'adresser à un seul équipement mobile ou un groupe d'équipements mobiles (par exemple un groupe de véhicules ayant souscrit à un même géo-service). L'identification associée au canal de notification et transmis dans ce canal de notification serait alors un identifiant collectif. Dans ce cas un seul message d'enregistrement serait envoyé au serveur central par exemple via un serveur de gestion de flotte pour cet ensemble de véhicules.

## Revendications

1. Procédé de souscription d'un équipement mobile (ME) à des informations sur des événements d'au moins un type auprès d'un service de notification lié à la géographie d'un lieu, ledit service de notification étant hébergé dans un serveur périphérique (SP1) de traitement de données dans un réseau d'architecture MEC, ledit procédé étant mis en oeuvre dans ledit équipement mobile (ME) et comportant des étapes de :
- envoi (E11) d'un message (ME11) de demande d'enregistrement auprès d'un serveur central (SC) dudit réseau,
- envoi (E21) d'un message (ME21) de souscription à destination dudit serveur périphérique (SP1) de traitement de données, audit au moins un type d'évènement,
- réception (E23) d'un message (ME23) donnant des informations audit équipement mobile (ME) sur un évènement dudit au moins un type,
ledit procédé étant tel que ledit message (ME11) de demande d'enregistrement indique ledit au moins un type d'évènement et en ce que l'étape d'envoi (E21) d'un message (ME21) de souscription est conditionnée à l'existence d'une étape précédente de réception (E17) d'un message (ME17) de notification qu'un évènement dudit au moins un type est survenu dans ledit lieu, des informations correspondantes étant enregistrées dans ledit serveur périphérique (SP1), ledit message (ME17) de notification étant délivré audit équipement mobile (ME) sur un canal de messagerie rapide dit canal de « paging ».

2. Procédé de souscription d'un équipement mobile selon la revendication 1, dans lequel ledit équipement mobile (ME) indique dans ledit message (ME21) de souscription une région d'intérêt pour laquelle ledit serveur périphérique (SP1) doit lui envoyer lesdites informations sur lesdits événements d'au moins un type.

3. Procédé de souscription d'un équipement mobile (ME) selon la revendication 2, dans lequel ledit équipement mobile (ME) est un module de communication d'un véhicule automobile et dans lequel ladite région d'intérêt correspond à une trajectoire programmée dudit véhicule.

4. Procédé de souscription d'un équipement mobile (ME) selon l'une quelconque des revendications 1 à 3, dans lequel l'étape de réception (E17) d'un message de notification (ME17) comporte une sous-étape de décodage d'un champ de données spécifique à une telle notification d'évènement, ledit champ de données spécifique étant inclus dans un champ de données attribué au réseau coeur et présent dans le champ « Paging record » dudit canal de messagerie rapide.

5. Procédé d'envoi à un équipement mobile (ME) d'informations sur un évènement d'un type par un serveur périphérique (SP1) de traitement de données hébergeant un service de notification lié à la géographie d'un lieu dans un réseau d'architecture MEC, ledit procédé étant mis en oeuvre dans ledit réseau et comportant des étapes de :
- réception par un serveur central (SC) d'un message (ME11) de demande d'enregistrement envoyé par ledit équipement mobile (ME), ledit message (ME11) comportant une indication d'au moins ledit type d'évènement,
- envoi par ledit serveur central (SC) d'un message (ME12) indiquant au moins ledit type d'évènement à au moins un serveur périphérique (SP1) de traitement de données dudit réseau hébergeant ledit service de notification,
- vérification (E14) par ledit au moins un serveur périphérique (SP1) de la présence d'évènements dudit type dans sa base de données,
- lorsque ledit au moins un serveur périphérique (SP1) comporte dans sa base de données un évènement dudit type, envoi (E16) par ledit au moins un serveur périphérique (SP1) d'un message (ME16) à au moins une station de base à laquelle il est rattaché pour diffusion sur un canal de messagerie rapide dit canal de « paging » d'un message de notification (ME17) de la présence dudit type d'évènement, audit équipement mobile (ME),
- réception par ledit au moins un serveur périphérique (SP1) d'un message de souscription (ME21) audit type d'évènement, envoyé par ledit équipement mobile (ME),
- envoi (E23) par ledit au moins un serveur périphérique (SP1) d'un message (ME23) audit équipement mobile (ME), donnant des informations sur ledit événement.

6. Procédé d'envoi à un équipement mobile (ME) d'informations sur un évènement d'un type par un serveur périphérique (SP1) de traitement de données selon la revendication 5, dans lequel ledit message de souscription (ME21) comporte une région d'intérêt, et dans lequel ladite étape (E23) d'envoi d'un message (ME23) donnant des informations est conditionnée au fait que ledit évènement concerne ladite région d'intérêt.

7. Procédé d'envoi à un équipement mobile d'informations sur un évènement d'un type par un serveur périphérique (SP1) de traitement de données selon la revendication 5 ou 6, dans lequel, lors de l'étape d'envoi par ledit serveur central (SC) d'un message (ME12) indiquant au moins ledit type d'évènement, ledit message (ME12) indiquant au moins ledit type d'évènement n'est envoyé qu'aux serveurs périphériques de traitement de données dudit réseau hébergeant ledit service de notification dont la couverture réseau correspond à la position actuelle ou programmée dudit équipement mobile (ME).

8. Procédé d'envoi à un équipement mobile (ME) d'informations sur un évènement d'un type par un serveur périphérique (SP1) de traitement de données selon la revendication 7, dans lequel ledit au moins un serveur périphérique (SP1) n'envoie un message (ME16) qu'aux stations de base correspondant à la position actuelle ou programmée dudit équipement mobile (ME), pour diffusion sur un canal de messagerie rapide dudit message de notification (ME17) de la présence dudit évènement audit équipement mobile (ME).

9. Procédé d'envoi à un équipement mobile (ME) d'informations sur un évènement d'un type par un serveur périphérique (SP1) de traitement de données selon la revendication 8, dans lequel ledit au moins un serveur périphérique (SP1) n'envoie ledit message à ladite au moins une station de base que si ledit évènement est associé à la zone couverte par ladite au moins une station de base.

10. Procédé d'envoi à un équipement mobile (ME) d'informations sur un évènement d'un type par un serveur périphérique (SP1) de traitement de données selon l'une quelconque des revendications 5 à 9, dans lequel l'étape d'envoi (E23) par ledit serveur périphérique (SP1) d'un message (ME23) donnant des informations audit équipement mobile (ME) est suivie d'une étape d'envoi (E33) d'un message (ME33) par ledit au moins un serveur périphérique (SP1) à ladite moins une station de base (SB1) à laquelle il est rattaché pour stopper la diffusion sur ledit canal de messagerie rapide dudit message de notification (ME17) lorsque ledit évènement devient obsolète ou lorsque ledit équipement mobile (ME) sort de la zone desservie par ledit au moins un serveur périphérique (SP1) de traitement de données.

## Patentansprüche

1. Abonnementverfahren eines Mobilgeräts (ME) bei einem mit der Geographie eines Orts verbundenen Benachrichtigungsdienst von Informationen über Ereignisse mindestens eines Typs, wobei der Benachrichtigungsdienst in einem peripheren Datenverarbeitungsserver (SP1) in einem MEC-Architekturnetz untergebracht ist, wobei das Verfahren im Mobilgerät (ME) durchgeführt wird und folgende Schritte enthält:
- Senden (E11) einer Nachricht (ME11) eines Registrierungsantrags bei einem Zentralserver (SC) des Netzes,
- Senden (E21) einer Abonnement-Nachricht (ME21) des mindestens einen Ereignisses an den peripheren Datenverarbeitungsserver (SP1),
- Empfang (E23) einer Nachricht (ME23), die dem Mobilgerät (ME) Informationen über ein Ereignis des mindestens einen Typs gibt,
wobei das Verfahren so ist, dass die Registrierungsantrag-Nachricht (ME11) den mindestens einen Ereignistyp anzeigt, und dass der Schritt des Sendens (E21) einer Abonnement-Nachricht (ME21) durch das Vorhandensein eines vorhergehenden Schritts des Empfangs (E17) einer Benachrichtigungsnachricht (ME17) bedingt wird, dass ein Ereignis des mindestens einen Typs an dem Ort aufgetreten ist, wobei entsprechende Informationen im peripheren Server (SP1) registriert werden, wobei die Benachrichtigungsnachricht (ME17) auf einem "Paging"-Kanal genannten schnellen Nachrichtenübermittlungskanal an das Mobilgerät (ME) geliefert wird.

2. Abonnementverfahren eines Mobilgeräts nach Anspruch 1, wobei das Mobilgerät (ME) in der Abonnement-Nachricht (ME21) einen Bereich von Interesse anzeigt, für den der periphere Server (SP1) ihm die Informationen über die Ereignisse mindestens eines Typs senden soll.

3. Abonnementverfahren eines Mobilgeräts (ME) nach Anspruch 2, wobei das Mobilgerät (ME) ein Kommunikationsmodul eines Kraftfahrzeugs ist, und wobei der Bereich von Interesse einer programmierten Wegstrecke des Fahrzeugs entspricht.

4. Abonnementverfahren eines Mobilgeräts (ME) nach einem der Ansprüche 1 bis 3, wobei der Schritt des Empfangs (E17) einer Benachrichtigungsnachricht (ME17) einen Teilschritt der Decodierung eines für eine solche Ereignis-Benachrichtigung spezifischen Datenfelds aufweist, wobei das spezifische Datenfeld in einem Datenfeld enthalten ist, das dem Kernnetz zugewiesen und im Feld "Paging record" des schnellen Nachrichtenübermittlungskanals vorhanden ist.

5. Verfahren zum Senden von Informationen über ein Ereignis eines Typs durch einen peripheren Datenverarbeitungsserver (SP1), in dem ein mit der Geographie eines Orts in einem MEC-Architekturnetz verbundener Benachrichtigungsdienst untergebracht ist, an ein Mobilgerät (ME), wobei das Verfahren in dem Netz durchgeführt wird und folgende Schritte enthält:
- Empfang einer vom Mobilgerät (ME) gesendeten Registrierungsantrag-Nachricht (ME11) durch einen Zentralserver (SC), wobei die Nachricht (ME11) eine Anzeige mindestens des Ereignistyps aufweist,
- Senden einer mindestens den Ereignistyp anzeigenden Nachricht (ME12) durch den Zentralserver (SC) an mindestens einen peripheren Datenverarbeitungsserver (SP1) des Netzes, in dem der Benachrichtigungsdienst untergebracht ist,
- Überprüfung (E14) des Vorhandenseins von Ereignissen des Typs in seiner Datenbank durch den mindestens einen peripheren Server (SP1),
- wenn der mindestens eine periphere Server (SP1) in seiner Datenbank ein Ereignis des Typs aufweist, Senden (E16) einer Nachricht (ME16) an mindestens eine Basisstation, mit der er verbunden ist, durch den mindestens einen peripheren Server (SP1) zur Verbreitung einer Benachrichtigungsnachricht (ME17) über das Vorhandensein des Ereignistyps auf einem schnellen Nachrichtenübermittlungskanal, "Paging-Kanal" genannt, an das Mobilgerät (ME),
- Empfang einer vom Mobilgerät (ME) gesendeten Abonnement-Nachricht (ME21) des Ereignistyps durch den mindestens einen peripheren Server (SP1),
- Senden (E23) einer Informationen über das Ereignis liefernden Nachricht (ME23) an das Mobilgerät (ME) durch den mindestens einen peripheren Server (SP1).

6. Verfahren zum Senden von Informationen über ein Ereignis eines Typs durch einen peripheren Datenverarbeitungsserver (SP1) an ein Mobilgerät (ME) nach Anspruch 5, wobei wobei die Abonnement-Nachricht (ME21) einen Bereich von Interesse aufweist, und wobei der Schritt (E23) des Sendens einer Informationen gebenden Nachricht (ME23) durch die Tatsache bedingt wird, dass das Ereignis den Bereich von Interesse betrifft.

7. Verfahren zum Senden von Informationen über ein Ereignis eines Typs durch einen peripheren Datenverarbeitungsserver (SP1) an ein Mobilgerät nach Anspruch 5 oder 6, wobei im Schritt des Sendens einer mindestens den Ereignistyp anzeigenden Nachricht (ME12) durch den Zentralserver (SC) die mindestens den Ereignistyp anzeigende Nachricht (ME12) nur an die peripheren Datenverarbeitungsserver des Netzes gesendet wird, in denen der Benachrichtigungsdienst untergebracht ist, deren Netzabdeckung der aktuellen oder programmierten Position des Mobilgeräts (ME) entspricht.

8. Verfahren zum Senden von Informationen über ein Ereignis eines Typs durch einen peripheren Datenverarbeitungsserver (SP1) an ein Mobilgerät (ME) nach Anspruch 7, wobei der mindestens eine periphere Server (SP1) eine Nachricht (ME16) nur an die Basisstationen sendet, die der aktuellen oder programmierten Position des Mobilgeräts (ME) entsprechen, zur Verbreitung der Benachrichtigungsnachricht (ME17) über das Vorhandensein des Ereignisses an das Mobilgerät (ME) auf einem schnellen Nachrichtenübermittlungskanal.

9. Verfahren zum Senden von Informationen über ein Ereignis eines Typs durch einen peripheren Datenverarbeitungsserver (SP1) an ein Mobilgerät (ME) nach Anspruch 8, wobei der mindestens eine periphere Server (SP1) die Nachricht nur an die mindestens eine Basisstation sendet, wenn das Ereignis der von der mindestens einen Basisstation abgedeckten Zone zugeordnet ist.

10. Verfahren zum Senden von Informationen über ein Ereignis eines Typs durch einen peripheren Datenverarbeitungsserver (SP1) an ein Mobilgerät (ME) nach einem der Ansprüche 5 bis 9, wobei auf den Schritt des Sendens (E23) einer Informationen angebenden Nachricht (ME23) durch den peripheren Server (SP1) an das Mobilgerät (ME) ein Schritt des Sendens (E33) einer Nachricht (ME33) durch den mindestens einen peripheren Server (SP1) an die mindestens eine Basisstation (SB1) folgt, an die er angeschlossen ist, um die Verbreitung der Benachrichtigungsnachricht (ME17) auf dem schnellen Nachrichtenübermittlungskanal zu stoppen, wenn das Ereignis obsolet wird oder wenn das Mobilgerät (ME) die vom mindestens einen peripheren Datenverarbeitungsserver (SP1) bediente Zone verlässt.

## Claims

1. Method for subscribing a mobile equipment (ME) to information on events of at least one type from a notification service linked to the geography of a location, said notification service being hosted in a data processing peripheral server (SP1) in an MEC architecture network, said method being implemented in said mobile equipment (ME) and comprising steps of:
- sending (E11) of a message (ME11) requesting registration to a central server (SC) of said network,
- sending (E21) of a message (ME21) for subscription, intended for said data processing peripheral server (SP1), to said at least one type of event,
- reception (E23) of a message (ME23) giving information to said mobile equipment (ME) on an event of said at least one type,
said method being such that said registration request message (ME11) indicates said at least one type of event and that the step of sending (E21) of a subscription message (ME21) is conditioned on the existence of a preceding step of reception (E17) of a notification message (ME17) that an event of said at least one type has occurred in said location, corresponding information being stored in said peripheral server (SP1), said notification message (ME17) being delivered to said mobile equipment (ME) over a fast messaging channel called "paging" channel.

2. Method for subscribing a mobile equipment according to Claim 1, wherein said mobile equipment (ME) indicates in said subscription message (ME21) a region of interest for which said peripheral server (SP1) must send it said information on said events of at least one type.

3. Method for subscribing a mobile equipment (ME) according to Claim 2, wherein said mobile equipment (ME) is a communication module of a motor vehicle and wherein said region of interest corresponds to a programmed path of said vehicle.

4. Method for subscribing a mobile equipment (ME) according to any one of Claims 1 to 3, wherein the step of reception (E17) of a notification message (ME17) comprises a substep of decoding of a data field specific to such an event notification, said specific data field being included in a data field assigned to the core network and present in the "paging record" field of said fast messaging channel.

5. Method for sending a mobile equipment (ME) information on an event of a type by a data processing peripheral server (SP1) hosting a notification service linked to the geography of a location in an MEC architecture network, said method being implemented in said network and comprising steps of:
- reception by a central server (SC) of a registration request message (ME11) sent by said mobile equipment (ME), said message (ME11) comprising an indication of at least said type of event,
- sending by said central server (SC) of a message (ME12) indicating at least said type of event to at least one data processing peripheral server (SP1) of said network hosting said notification service,
- verification (E14) by said at least one peripheral server (SP1) of the presence of events of said type in its database,
- when said at least one peripheral server (SP1) includes in its database an event of said type, sending (E16) by said at least one peripheral server (SP1) of a message (ME16) to at least one base station to which it is attached for broadcasting, on a fast messaging channel called "paging" channel, of a message (ME17) notifying the presence of said type of event to said mobile equipment (ME),
- reception by said at least one peripheral server (SP1) of a subscription message (ME21) to said type of event, sent by said mobile equipment (ME),
- sending (E23) by said at least one peripheral server (SP1) of a message (ME23) to said mobile equipment (ME), giving information on said event.

6. Method for sending a mobile equipment (ME) information on an event of a type by a data processing peripheral server (SP1) according to Claim 5, wherein said subscription message (ME21) comprises a region of interest, and wherein said step (E23) of sending of a message (ME23) giving information is conditioned on the fact that said event concerns said region of interest.

7. Method for sending a mobile equipment information on an event of a type by a data processing peripheral server (SP1) according to Claim 5 or 6, wherein, in the step of sending by said central server (SC) of a message (ME12) indicating at least said type of event, said message (ME12) indicating at least said type of event is sent only to the data processing peripheral servers of said network hosting said notification service for which the network coverage corresponds to the current or programmed position of said mobile equipment (ME).

8. Method for sending a mobile equipment (ME) information on an event of a type by a data processing peripheral server (SP1) according to Claim 7, wherein said at least one peripheral server (SP1) sends a message (ME16) only to the base stations corresponding to the current or programmed position of said mobile equipment (ME), for broadcasting, on a fast messaging channel, of said message (ME17) notifying the presence of said event to said mobile equipment (ME).

9. Method for sending a mobile equipment (ME) information on an event of a type by a data processing peripheral server (SP1) according to Claim 8, wherein said at least one peripheral server (SP1) sends said message to said at least one base station only if said event is associated with the zone covered by said at least one base station.

10. Method for sending a mobile equipment (ME) information on an event of a type by a data processing peripheral server (SP1) according to any one of Claims 5 to 9, wherein the step of sending (E23) by said peripheral server (SP1) of a message (ME23) giving information to said mobile equipment (ME) is followed by a step of sending (E33) of a message (ME33) by said at least one peripheral server (SP1) to said at least one base station (SB1) to which it is attached to stop the broadcasting on said fast messaging channel of said notification message (ME17) when said event becomes obsolete or when said mobile equipment (ME) leaves the zone served by said at least one data processing peripheral server (SP1).
